# EUROPÄISCHE PATENTSCHRIFT

(11) **EP 1 599 972 B1**
(45) Veröffentlichungstag und Bekanntmachung des Hinweises auf die Patenterteilung: **14.07.2010**
(21) Anmeldenummer: 04737281.8
(22) Anmeldetag: 27.02.2004
(51) Int. Cl.: H04L 12/28, H04W 36/00

(54) **VERFAHREN UND DRAHTLOS ANKOPPELBARE KOMMUNIKATIONSEINRICHTUNG ZUR PAKETORIENTIERTEN DATENÜBERTRAGUNG**
METHOD AND WIRELESSLY CONNECTABLE COMMUNICATIONS DEVICE FOR PACKET-ORIENTED DATA TRANSMISSION
PROCEDE ET DISPOSITIF DE COMMUNICATION A COUPLAGE SANS FIL DESTINES A LA TRANSMISSION DE DONNEES EN MODE PAQUETS

(30) Priorität: 04.03.2003 DE 10309337
(43) Veröffentlichungstag der Anmeldung: 30.11.2005
(73) Patentinhaber: SIEMENS AKTIENGESELLSCHAFT, 80333 München (DE)
(72) Erfinder: KARL, Holger, 33100 Paderborn (DE); MÜLLER, Harald, 82205 Gilching (DE); SCHLÄGER, Morten, 14050 Berlin (DE); TOTZKE, Jürgen, 85586 Poing (DE); WEI, Xing, 2014 Strovolos Nicosia (CY)
(74) Vertreter: Fritzsche, Thomas
(86) Internationale Anmeldenummer: PCT/EP2004/001993
(87) Internationale Veröffentlichungsnummer: WO 2004/079997

(56) Entgegenhaltungen:
- EP-A- 0 577 322
- WO-A-00/59160
- WO-A-03/017689
- US-A1- 2001 030 949
- ZHANG TAO ET AL: "Ip-Based Base Stations and Soft Handoff in All-IP Wireless Networks" IEEE PERSONAL COMMUNICATIONS, IEEE COMMUNICATIONS SOCIETY, US, Oktober 2001 (2001-10), Seiten 24-30, XP000864164 ISSN: 1070-9916

## Beschreibung

Zeitgemäße paketorientierte Kommunikationsnetze, wie z.B. lokale Netze, sog. LANs (Local Area Network), oder Weitverkehrsnetze, sog. WANs (Wide Area Network), wie das Internet, werden im zunehmenden Maße mit Basisstationen zur drahtlosen Ankopplung von Kommunikationseinrichtungen ausgerüstet. Eine solche an ein Kommunikationsnetz angekoppelte Basisstation bildet einen drahtlosen Zugangspunkt, einen sogenannten Access Point für dieses Kommunikationsnetz. Beispiele für drahtlos an ein paketorientiertes Kommunikationsnetz ankoppelbare Kommunikationseinrichtungen sind mobile Netzwerk- und Datenverarbeitungseinrichtungen, wie z.B. mit Luftschnittstellen ausgerüstete Laptops, Notebooks und PDAs (Personal Digital Assistant), sowie internetprotokollbasierte mobile Sprach-, Video-, Fax-, Multimedia- und Daten-Ein/Ausgabeeinrichtungen. Ein paketorientiertes lokales Netz mit drahtlos angekoppelten Kommunikationseinrichtungen wird häufig auch als WLAN (Wireless LAN) bezeichnet.

Aufgrund einer zunehmenden Integration unterschiedlicher Kommunikations- und Datenverarbeitungsanwendungen, insbesondere bei Kombination von Echtzeit- und Datenkommunikation, werden an ein Kommunikationsnetz häufig eine Vielzahl unterschiedlicher Übertragungsanforderungen gestellt. Eine drahtlose Anbindung von Kommunikationseinrichtungen an ein paketorientiertes Kommunikationsnetz führt jedoch häufig zu Einbußen der Übertragungsleistung und -Flexibilität sowie zu einer höheren Fehler- und Störanfälligkeit, insbesondere während eines Handover-Vorgangs. Als Handover wird üblicherweise ein Wechsel der Funkanbindung einer Kommunikationseinrichtung von einer Basisstation zu einer anderen Basisstation bezeichnet.

In einem internetprotokollbasierten Kommunikationsnetz hat ein Handover einer Kommunikationseinrichtung oft zur Folge, dass der Kommunikationseinrichtung eine neue IP-Adresse (IP: Internet Protocol) zugewiesen wird. Ein Wechsel der IP-Adresse eines Verbindungsendpunkts bedingt bei TCP-Verbindungen (TCP: Transmission Control Protocol) allerdings, dass eine bestehende TCP-Verbindung abgebaut und eine neue, auf der neuen IP-Adresse basierende TCP-Verbindung aufgebaut wird. Eine derartige Verbindungsunterbrechung kann sich jedoch insbesondere bei Echtzeitverbindungen, beispielsweise durch Abbruch einer Signalisierungsverbindung sehr nachteilig auswirken.

Druckschrift US 2001/003949 A1 offenbart ein Verfahren und eine Vorrichtung zur Übertragung von Datenpaketen über Funk zwischen mobilen Stationen eines Benutzers mit einer Mehrzahl von Basisstationen.

Druckschrift WO 00/59160 A1 offenbart ein Verfahren und eine Vorrichtung zur Übertragung von Datenpaketen zwischen einer drahtlos ankoppelbaren Kommunikationseinrichtung und einem Kommunikationspartner, wobei die Datenpakete auf verschiedene Übertragungspfade zur Vergrößerung der Bandbreite aufgeteilt werden.

Es ist Aufgabe der vorliegenden Erfindung ein Verfahren zur paketorientierten Datenübertragung anzugeben, das insbesondere während eines Handover-Vorgangs eine flexiblere Anpassung an unterschiedliche Kommunikationsverhältnisse erlaubt. Es ist weiterhin Aufgabe der Erfindung eine drahtlos ankoppelbare Kommunikationseinrichtung zur Durchführung des Verfahrens anzugeben.

Gelöst wird diese Aufgabe durch ein Verfahren mit den Merkmalen des Patentanspruchs 1 sowie durch eine drahtlos ankoppelbare Kommunikationseinrichtung mit den Merkmalen des Patentanspruchs 8.

Zur Übertragung von Datenpaketen zwischen einer drahtlos ankoppelbaren Kommunikationseinrichtung und einem Kommunikationspartner wird bei Verfügbarkeit eines ersten drahtlosen

Übertragungspfades eine Verfügbarkeit mindestens eines weiteren drahtlosen Übertragungspfades detektiert. Infolge der Detektierung wird ein spezifisches Zuordnungsschema, durch das jedem der Übertragungspfade zumindest ein Teil der Datenpakete zugeordnet wird, abhängig von spezifischen Übertragungserfordernissen und/oder von einem zur Übertragung der Datenpakete zu verwendenden Übertragungsprotokoll, wie z.B. TCP, SCTP oder UDP, gewählt. Die Übertragungserfordernisse können beispielsweise Anforderungen an die Übertragungsbandbreite, an eine maximal zulässige Fehlerrate oder Echtzeitanforderungen betreffen. Gemäß dem gewählten Zuordnungsschema wird einem jeweiligen, einem Übertragungspfad zugeordneten Datenpaket eine für diesen Übertragungspfad spezifische Adressangabe, z.B. eine IP-Adresse oder eine Kombination aus IP-Adresse und Portnummer, zugeordnet. Mittels einer übertragungspfadspezifischen Adressangabe kann ein jeweiliger Übertragungspfad von anderen Übertragungspfaden unterschieden werden. Anhand der zugeordneten Adressangaben werden die Datenpakete über die verschiedenen Übertragungspfade zwischen der Kommunikationseinrichtung und dem Kommunikationspartner gemäß dem gewählten Zuordnungsschema übertragen.

Die Erfindung erlaubt es, eine parallele Verfügbarkeit mehrerer drahtloser Übertragungspfade in vorteilhafter und flexibler Weise zu nutzen. Durch eine protokollspezifische Aufteilung der zu übertragenden Datenpakete auf unterschiedliche Übertragungspfade können relevante Übertragungseigenschaften protokollspezifisch optimiert werden. Dies ist insbesondere dann vorteilhaft, wenn auf der drahtlos ankoppelbaren Kommunikationseinrichtung ablaufende Anwendungen verschiedene Übertragungsprotokolle, wie z.B. TCP und UDP, parallel nutzen. Für jedes solche parallel verwendete Übertragungsprotokoll kann ein spezifisches, an dieses Übertragungsprotokoll besonders angepasstes Zuordnungsschema gewählt werden.

Durch eine von spezifischen Übertragungserfordernissen abhängige Wahl eines Zuordnungsschemas, kann eine jeweilige Aufteilung der Datenpakete auf verschiedene Übertragungspfade gezielt an unterschiedliche Anforderungen z.B. für Echtzeitübertragungen oder Datenübertragungen angepasst werden. So können beispielsweise zur Erhöhung der Datenübertragungsrate aufeinanderfolgende Datenpakete abwechselnd über unterschiedliche Übertragungspfade übertragen werden. Alternativ dazu kann zur Verringerung der Fehlerrate jedes oder eine Auswahl der Datenpakete redundant über mehrere Übertragungspfade übertragen werden. Wahlweise können besonders relevante Datenpakete, z.B. Signalisierungsinformation enthaltende Datenpakete redundant über mehrere Übertragungspfade übermittelt werden und weniger relevante Datenpakete über alternierende Übertragungspfade.

Aufgrund der Zuordnung von pfadspezifischen Adressinformationen zu den zu übertragenden Datenpaketen kann zur paketindividuellen Lenkung der Datenpakete über die verschiedenen Übertragungspfade herkömmliche Routersoftware genutzt werden. Anders als bei einer Übertragung per Multicast-Adresse ist mit pfadspezifischen Adressinformationen eine individuelle Steuerung der Pfadauswahl möglich.

Die Erfindung lässt sich besonders vorteilhaft bei Handover-Vorgängen anwenden, währenddessen sich die Kommunikationseinrichtung, zumindest temporär, in Funkreichweite mehrerer Basisstationen befindet. Durch eine an die momentane Übertragungssituation anpassbare Aufteilung der Datenpakete auf verschiedene Übertragungspfade kann das Risiko von Datenverlusten oder Übertragungsunterbrechungen erheblich gesenkt werden. Die Anwendung der Erfindung ist jedoch nicht nur auf Handover-Vorgänge beschränkt, sondern kann in vorteilhafter Weise auf den allgemeinen Fall ausgedehnt werden, bei dem sich die Kommunikationseinrichtung gleichzeitig in Funkreichweite mehrerer Basisstationen, die auch verschiedenen Funknetzen angehören können, befindet.

Vorteilhafte Ausführungsformen und Weiterbildungen der Erfindung sind in den abhängigen Ansprüchen angegeben.

Gemäß einer vorteilhaften Weiterbildung der Erfindung können eine oder mehrere spezifische Übertragungseigenschaften, wie z.B. Übertragungskapazität, Bandbreite, Übertragungsverzögerung und/oder Dienstgüte des mindestens einen weiteren Übertragungspfades erfasst werden. Die Wahl des Zuordnungsschemas kann dann abhängig von den erfassten Übertragungseigenschaften erfolgen. Weiterhin kann die Wahl des Zuordnungsschemas abhängig von einem Schätzwert für die Dauer der Verfügbarkeit mindestens eines der Übertragungspfade und/oder abhängig von der Anzahl der verfügbaren Übertragungspfade erfolgen. Darüber hinaus kann die Zuordnung eines jeweiligen Datenpaketes zu mindestes einem Übertragungspfad in Abhängigkeit von Typ, Inhalt und/oder Zweckbestimmung des Datenpakets vorgenommen werden.

So können z.B. Echtzeitdaten über einen Übertragungspfad, der, zumindest momentan, besonders gute Echtzeiteigenschaften aufweist, und Signalisierungs- und Allgemeindaten über einen anderen Übertragungspfad übertragen werden. Echtzeitdaten und Allgemeindaten können auch kombiniert übertragen werden, wobei beide Datentypen in unterschiedlicher und jeweils optimal an deren Übertragungserfordernisse angepasster Weise auf die verschiedenen Übertragungspfade aufgeteilt werden. Beispielsweise können bei einer Multimediaübertragung per UDP-Protokoll besonders relevante Datenpakete, wie z.B. sogenannte I-Frames bei einer MPEG-Kodierung, über mehrere Übertragungspfade übermittelt werden und weniger relevante Datenpakete über alternierende Pfade. Weiterhin können z.B. bei TCPbasierten Übertragungen erstmalig zu übertragende Datenpakete jeweils abwechselnd über mehrere Übertragungspfade und Übertragungswiederholungen parallel über mehrere Übertragungspfade oder über einen für die Erstübertragung nicht genutzten Übertragungspfad übertragen werden.

Die Zuordnung der Datenpakete zu Übertragungspfaden kann in der Transportschicht, d.h. in Schicht 4 gemäß OSI-Referenzmodell, und/oder einer darüber liegenden Protokollschicht, z.B. in Schicht 7 oder in einer modifizierten Socketschicht, ausgeführt werden.

Gemäß einer weiteren vorteilhaften Weiterbildung der Erfindung kann die Zuordnung der Datenpakete zu den Übertragungspfaden abhängig von im Rahmen einer Flusskontrolle und/oder Überlastkontrolle erfassten Übertragungsparametern erfolgen.

Ein Ausführungsbeispiel der Erfindung wird nachfolgend anhand der Zeichnung näher erläutert.

Dabei zeigen jeweils in schematischer Darstellung:
- Figur 1: ein Kommunikationssystem mit einer drahtlos an- koppelbaren Kommunikationseinrichtung mit verschiedenen drahtlosen Übertragungspfaden zu einem Kommunikations- partner, und
- Figuren 2 und 3: jeweils ein Ablaufdiagramm zur Veran- schaulichung einer Datenübertragung über die verschiedenen Übertragungspfade.

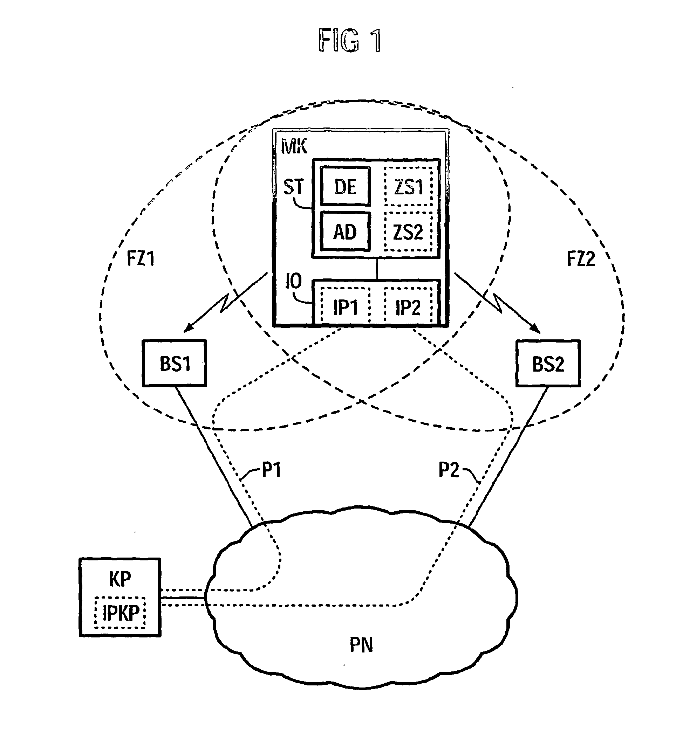

In Figur 1 ist ein Kommunikationssystem mit einem paketorientierten Kommunikationsnetz PN schematisch dargestellt, an das Basisstationen BS1 und BS2 jeweils über eine Netzwerkschnittstelle, z.B. Ethernet, angeschlossen sind. Das Kommunikationsnetz PN ist im vorliegenden Ausführungsbeispiel als IPbasiertes WLAN (Wireless Local Area Network) realisiert. Die Basisstationen BS1 und BS2 bilden sogenannte WLAN Access Points, z.B. gemäß dem IEEE-Standard 802.11b, zur drahtlosen Ankopplung von IP-basierten Kommunikationseinrichtungen an das Kommunikationsnetz PN.

Die Basisstationen BS1 und BS2 bilden Funkzellen FZ1 und FZ2 aus, die sich räumlich überlappen. Als Funkzelle wird üblicherweise ein räumlicher Bereich um eine Basisstation bezeichnet, in dem Kommunikationseinrichtungen drahtlos an diese Basisstation gekoppelt werden können. Die Funkzellen FZ1 und FZ2 werden in Figur 1 durch strichlierte Ellipsen veranschaulicht.

Im vorliegenden Ausführungsbeispiel befindet sich eine mobile Kommunikationseinrichtung MK im Überlappungsbereich beider Funkzellen FZ1 und FZ2 und ist - wie durch stilisierte Blitze angedeutet - über beide Basisstationen BS1 und BS2 drahtlos an das Kommunikationsnetz PN gekoppelt. Die mobile Kommunikationseinrichtung MK kann beispielsweise eine mobile Netzwerk- oder Datenverarbeitungseinrichtung, wie z.B. ein Laptop, Notebook oder PDA (Personal Digital Assistant) oder eine darauf ablaufende Kommunikationsanwendung oder ein Kommunikationsclient sein. Daneben kann die mobile Kommunikationseinrichtung MK auch durch eine mobile Sprach-, Video-, Fax-, Multimedia- oder Daten-Ein/Ausgabeeinrichtung oder durch ein IP-basiertes Mobiltelefon realisiert sein.

Die mobile Kommunikationseinrichtung MK tauscht über das Kommunikationsnetz PN, z.B. im Rahmen einer Sprach-, Video-, Multimedia- und/oder Datenübertragung, Datenpakete mit einem an das Kommunikationsnetz PN angeschlossenem Kommunikationspartner KP aus. Dem Kommunikationspartner KP ist eine IP-Adresse IPKP zugeordnet, über die der Kommunikationspartner KP im Kommunikationsnetz PN eindeutig adressierbar ist. Zur Übertragung der Datenpakete zwischen der mobilen Kommunikationseinrichtung MK und dem Kommunikationspartner KP sind mehrere Übertragungspfade P1 und P2 - zumindest temporär - parallel verfügbar. Während der erste Übertragungspfad P1 von der mobilen Kommunikationseinrichtung MK über die Basisstation BS1 und das Kommunikationsnetz PN zum Kommunikationspartner KP führt, verläuft der zweite Übertragungspfad P2 über die Basisstation BS2 und das Kommunikationsnetz PN zum Kommunikationspartner KP. Die Übertragungspfade P1 und P2 sind in Figur 1 durch punktierte Linien veranschaulicht.

Für das vorliegende Ausführungsbeispiel sei angenommen, dass das Kommunikationsnetz PN mehrere Schicht-2-Knoten (Brücken) sowie mehrere Schicht-3-Knoten (Router) und mithin mehrere verschiedene Teilnetze umfasst. In einem solchen Fall werden der mobilen Kommunikationseinrichtung MK im Zuge ihrer Ankopplung an die Basisstationen BS1 und BS2 von beiden Basisstationen unterschiedliche IP-Adressen IP1 und IP2 zugewiesen. Die IP-Adressen IP1 und IP2 sind pfadspezifisch, wobei IP1 dem Übertragungspfad P1 und IP2 dem Übertragungspfad P2 zugeordnet ist. Nach Zuweisung der IP-Adressen IP1 und IP2 sind die Übertragungspfade P1 und P2 verfügbar. Anhand der sich voneinander unterscheidenden IP-Adressen IP1 und IP2 können die Übertragungspfade P1 und P2 in beiden Übertragungsrichtungen unterschieden und explizit adressiert bzw. ausgewählt werden. Die IP-Adressen IP1 und IP2 sind im Kommunikationsnetz PN gültige Netzwerkadressen, d.h. auf Schicht 3 des OSI-Referenzmodells wirksame Adressangaben, anhand der Datenpakete über die Übertragungspfade P1 und P2 geleitet werden können. Alternativ oder zusätzlich kann die Unterscheidung der Übertragungspfade P1 und P2 auch anhand von unterschiedlichen Portnummern erfolgen, die den Übertragungspfaden P1 und P2 zugeordnet werden. Auf diese Weise werden vom Kommunikationspartner KP mit IP1 als Zieladresse versehene Datenpakete durch das Kommunikationsnetz PN entlang dem Übertragungspfad P1 zur Basisstation BS1 und von dieser zu einer der IP-Adresse IP1 zugeordneten IP-Schnittstelle der mobilen Kommunikationseinrichtung MK geleitet. Entsprechend werden Datenpakete mit Zieladresse IP2 durch das Kommunikationsnetz PN entlang des Übertragungspfades P2 zur Basisstation BS2 und von dieser zu einer der IP-Adresse IP2 zugeordneten IP-Schnittstelle der mobilen Kommunikationseinrichtung MK übermittelt. Datenpakete, die von der mobilen Kommunikationseinrichtung MK zum Kommunikationspartner KP zu übermitteln sind, werden je nach eingefügter Ursprungs-IP-Adresse über den Übertragungspfad P1 oder P2 übertragen. D.h. mit der IP-Adresse IPKP als Zieladresse und mit der IP-Adresse IP1 als Ursprungsadresse versehene Datenpakete werden über die der IP-Adresse IP1 zugeordnete IP-Schnittstelle der mobilen Kommunikationseinrichtung MK zur Basisstation BS1 und von dieser über das Kommunikationsnetz PN zum Kommunikationspartner KP übertragen. Analog dazu werden mit der IP-Adresse IP2 als Ursprungsadresse versehene Datenpakete über die Basisstation BS2 zum Kommunikationspartner KP übertragen.

Zum Übertragen und Empfangen von Datenpaketen verfügt die mobile Kommunikationseinrichtung MK über eine Sende/Empfangseinrichtung IO. Die Sendeempfangseinrichtung IO weist für jeden drahtlosen Access Point, hier die Basisstation BS1 bzw. BS2., über den die mobile Kommunikationseinrichtung MK an das Kommunikationsnetz PN ankoppelbar ist jeweils eine separate IP-Schnittstelle auf. Die IP-Schnittstellen sind jeweils einer spezifischen IP-Adresse, hier IP1 bzw. IP2 zugeordnet. Vorzugsweise können die IP-Schnittstellen mittels sogenannter Sockets realisiert werden.

Die mobile Kommunikationseinrichtung MK weist ferner mit der Sende/Empfangseinrichtung IO gekoppelte Steuermittel ST zur Steuerung der Datenübertragung auf. Die Steuermittel ST können beispielsweise mittels Programmmodulen, Betriebssystemfunktionen oder programmtechnischer Objekte implementiert sein. Die Steuermittel ST umfassen Detektormittel DE zum Detektieren unterschiedlicher drahtloser Übertragungspfade, hier P1 und P2, mehrere Zuordnungsschemata ZS1 und ZS2, durch die jeweils jedem der Übertragungspfade P1 und P2 zumindest ein Teil der zu übertragenden Datenpakete zugeordnet werden, sowie Adressierungsmittel AD zum Einfügen von Ursprungs- und/oder Ziel-IP-Adressen in Datenpakete gemäß einem jeweiligen Zuordnungsschema ZS1 bzw. ZS2.

Die unterschiedlichen Zuordnungsschemata ZS1 und ZS2 können z.B. als Programmanweisungen, die wahlweise auf unterschiedliche Tabellen zurückgreifen, oder als unterschiedliche, wahlweise aufrufbare Unterprogramme implementiert sein. Für das vorliegende Ausführungsbeispiel sei angenommen, dass durch das Zuordnungsschema ZS1 aufeinanderfolgende Datenpakete eines Datenstroms abwechselnd dem Übertragungspfad P1 und dem Übertragungspfad P2 zugeordnet werden und durch das Zuordnungsschema ZS2 alle Datenpakete eines Datenstroms beiden Übertragungspfaden P1 und P2 zugeordnet werden.

Neben den angegebenen Zuordnungsschemata ZS1 und ZS2 können ein oder mehrere weitere Zuordnungsschemata als Zwischenformen vorgesehen sein; z.B. ein Zuordnungsschema, durch das ein zu spezifizierender Teil der zu übertragenden Datenpakete mehreren Übertragungspfaden zugeordnet wird.

Ein jeweiliges Zuordnungsschema, hier ZS1 bzw. ZS2, wird durch die Steuermittel ST abhängig von einem zur Datenübertragung zu verwendenden Übertragungsprotokoll und/oder abhängig von dynamisch erfassten Übertragungserfordernissen, z.B. hinsichtlich Echtzeitanforderungen oder Bandbreitenanforderungen, dynamisch und adaptiv aus mehreren unterschiedlichen Zuordnungsschemata, hier ZS1 und ZS2 ausgewählt. Bei der Auswahl eines Zuordnungsschemas können vorzugsweise auch dynamisch erfasste Übertragungseigenschaften der verfügbaren Übertragungspfade, hier P1 und P2, berücksichtigt werden.

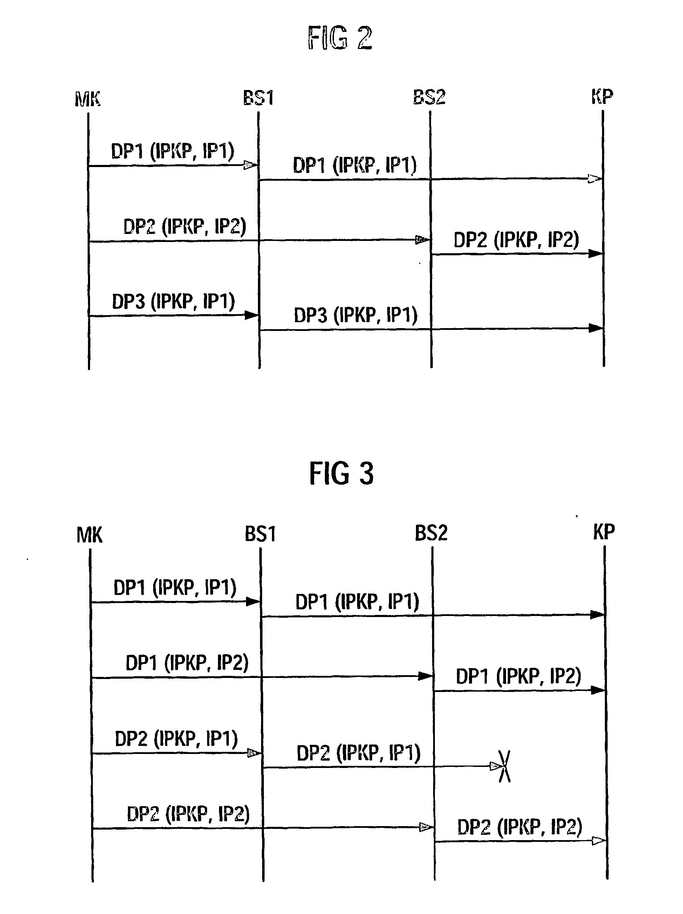

Die Figuren 2 und 3 zeigen jeweils ein Ablaufdiagramm zur Veranschaulichung einer Datenübertragung über die verschiedenen Übertragungspfade P1 und P2 bei Auswahl unterschiedlicher Zuordnungsschemata ZS1 und ZS2. Betrachtet sei jeweils eine Übertragung aufeinanderfolgender Datenpakete DP1, DP2 und DP3 eines Datenpaketstroms mit UDP (User Datagram Protocol) als Transportprotokoll von der mobilen Kommunikationseinrichtung MK zum Kommunikationspartner KP. Die Datenpakete DP1, DP2 und DP3 sind jeweils mit der IP-Adresse IPKP des Kommunikationspartners KP als Zieladresse versehen.

Figur 2 veranschaulicht eine auf dem Zuordnungsschema ZS1 basierende Übertragung. Das Zuordnungsschema ZS1 wird z.B. dann von den Steuermitteln ST in dynamischer Weise zur Übertragung eines Datenstroms ausgewählt, wenn erhöhte Anforderungen an die Übertragungsrate des Datenstroms, z.B. bei Echtzeit-Sprach- oder -Videoübertragungen bestehen. Entsprechend des gewählten Zuordnungsschemas ZS1 werden die aufeinanderfolgenden Datenpakete DP1, DP2 und DP3 paketindividuell durch die Adressierungsmittel AD abwechselnd mit den IP-Adressen IP1 und IP2 als jeweilige Ursprungsadresse versehen. Von der Sende/Empfangseinrichtung IO werden die Datenpakete DP1, DP2 und DP3 dann je nach ihrer Ursprungsadresse IP1 bzw. IP2 über die entsprechende IP-Schnittstelle über den Übertragungspfad P1 bzw. P2 gelenkt. D.h. die mit der IP-Adresse IP1 als Ursprungsadresse versehenen Datenpakete DP1 und DP3 werden über die Basisstation BS1 und damit über den Übertragungspfad P1 zum Kommunikationspartner KP übermittelt. Analog wird das mit der IP-Adresse IP2 versehene Datenpaket DP2 über die Basisstation BS2 und damit über den Übertragungspfad P2 zum Kommunikationspartner KP geleitet. Da sich der Datenstrom gleichmäßig auf beide verfügbaren Übertragungspfade P1 und P2 aufteilt, steht für den Datenstrom die Summe der Übertragungsraten der Übertragungspfade P1 und P2 zur Verfügung. Somit erhöht sich die effektive Bandbreite für die Übertragung des Datenstroms.

Figur 3 veranschaulicht eine auf dem Zuordnungsschema ZS2 basierende Übertragung eines Datenstroms. Das Zuordnungsschema ZS2 wird z.B. dann dynamisch durch die Steuermittel ST ausgewählt, wenn nur eine geringe Übertragungsfehlerrate zulässig ist, wie z.B. bei Programmdaten. Die Datenpakete DP1 und DP2 werden gemäß dem gewählten Zuordnungsschema ZS2 paketindividuell jeweils beiden Übertragungspfaden P1 und P2 zugeordnet. Zur Parallelübertragung der Datenpakete DP1 und DP2 über beide Übertragungspfade P1 und P2 werden die Datenpakete DP1 und DP2 jeweils dupliziert. Durch die Adressierungsmittel AD wird dann jeweils einem ersten der duplizierten Datenpakete DP1 und DP2 die IP-Adresse IP1 als Ursprungsadresse und jeweils einem zweiten der duplizierten Datenpakete DP1 und DP2 die IP-Adresse IP2 als Ursprungsadresse eingefügt. Von der Sende/Empfangseinrichtung IO werden die duplizierten Datenpakete DP1 und DP2 je nach ihrer Ursprungsadresse IP1 bzw. IP2 über die entsprechenden IP-Schnittstellen über die Übertragungpfade P1 und P2 gelenkt. D.h. die Datenpakete DP1 und DP2 werden jeweils sowohl über die Basisstation BS1 als auch BS2 übertragen. Geht ein Datenpaket, beispielsweise das über den Übertragungspfad P1 zum Kommunikationspartner KP übertragene Datenpaket DP2 - wie in Figur 3 durch ein Kreuz angedeutet - verloren, so kann durch den Kommunikationspartner KP das über den Übertragungspfad P2 empfangene Datenpaket DP2 selektiert und verarbeitet werden, ohne dass eine erneute Anforderung des Datenpakets erforderlich wäre.

Falls zusätzlich Informationen über verfügbare Übertragungskapazitäten der Übertragungspfade P1 und/oder P2 erfasst werden, so kann die Aufteilung der zu übertragenden Datenpakete auf die Übertragungspfade P1 und P2 an die erfassten Informationen angepasst werden. Die Anpassung kann dabei durch Wahl eines neuen Zuordnungsschemas oder durch Modifikation eines bestehenden Zuordnungsschemas erfolgen.

Weiterhin kann die Entscheidung inwieweit Datenpakete parallel oder alternativ über mehrere Übertragungspfade übertragen werden, abhängig von einer Schätzung der Pfadstabilität auf Ebene der Sicherungsschicht und/oder von der Dauer der gleichzeitigen Verfügbarkeit mehrerer Übertragungspfade erfolgen.

## Patentansprüche

1. Verfahren zur Übertragung von Datenpaketen (DP1, DP2, DP3) eines Datenstromes zwischen einer drahtlos ankoppelbaren Kommunikationseinrichtung (MK) und einem Kommunikationspartner (KP) insbesondere während eines Handover-Vorgangs, wobei
a) bei Verfügbarkeit eines ersten drahtlosen Übertragungspfades (P1) eine Verfügbarkeit mindestens eines weiteren drahtlosen Übertragungspfades (P2) detektiert wird,
b) infolge der Detektierung ein spezifisches Zuordnungsschema (ZS1, ZS2), durch das jedem der Übertragungspfade (P1, P2) zumindest ein Teil der Datenpakete (DP1, DP2, DP3) zugeordnet wird, abhängig von spezifischen Übertragungserfordernissen und/oder von einem zur Übertragung der Datenpakete (DP1, DP2, DP3) zu verwendenden Übertragungsprotokoll gewählt wird,
c) einem jeweiligen, einem Übertragungspfad (P1, P2) zugeordneten Datenpaket eine für diesen Übertragungspfad (P1, P2) spezifische Adressangabe (IP1, IP2) zugeordnet wird,
d) die Datenpakete (DP1, DP2, DP3) anhand der ihnen zugeordneten Adressangaben (IP1, IP2) gemäß dem gewählten Zuordnungsschema (ZS1, ZS2) über die verschiedenen Übertragungspfade (P1, P2) zwischen der Kommunikationseinrichtung (MK) und dem Kommunikationspartner (KP) übertragen werden und
e) mindestens sowohl ein erstes (ZS1) als auch zweites Zuordnungsschema (ZS2) selektierbar ist, wobei
- durch das erste Zuordnungsschema (ZS1) aufeinanderfolgende Datenpakete (DP1, DP2, DP3) des Datenstromes abwechselnd dem ersten drahtlosen Übertragungspfad (P1) und mindestens einem weiteren drahtlosen Übertragungs-
- Pfad (P2) zur Vergrößerung der Bandbreite zugeordnet werden und
- durch das zweite Zuordnungschema (ZS2) alle Datenpakete (DP1, DP2, DP3) des Datenstromes während eines Handover-Vorgangs beiden Übertragungspfaden (P1, P2) zur Parallelübertragung zugeordnet werden.

2. Verfahren nach Anspruch 1,
**dadurch gekennzeichnet,**
**dass** eine spezifische Übertragungseigenschaft des mindestens einen weiteren Übertragungspfades (P2) erfasst wird, und die Wahl des Zuordnungsschemas (ZS1, ZS2) abhängig von der
erfassten Übertragungseigenschaft erfolgt.

3. Verfahren nach einem der vorhergehenden Ansprüche,
**dadurch gekennzeichnet,**
**dass** die Wahl des Zuordnungsschemas (ZS1, ZS2) abhängig von einem Schätzwert für die Dauer der Verfügbarkeit mindestens eines der Übertragungspfade (P1, P2) erfolgt.

4. Verfahren nach einem der vorhergehenden Ansprüche,
**dadurch gekennzeichnet,**
**dass** die Wahl des Zuordnungsschemas (ZS1, ZS2) abhängig von der Anzahl der verfügbaren Übertragungspfade (P1, P2) erfolgt.

5. Verfahren nach einem der vorhergehenden Ansprüche,
**dadurch gekennzeichnet,**
**dass** die Zuordnung eines jeweiligen Datenpakets (DP1, DP2, DP3) zu mindestens einem Übertragungspfad (P1, P2) abhängig von Typ, Inhalt und/oder Zweckbestimmung des Datenpakets (DP1, DP2, DP3) erfolgt.

6. Verfahren nach einem der vorhergehenden Ansprüche,
**dadurch gekennzeichnet,**
**dass** die Zuordnung der Datenpakete (DP1, DP2, DP3) zu den Übertragungspfaden in der Transportschicht und/oder einer darüber liegenden Protokollschicht gemäß OSI-Referenzmodell ausgeführt wird.

7. Verfahren nach einem der vorhergehenden Ansprüche,
**dadurch gekennzeichnet,**
**dass** die Zuordnung der Datenpakete (DP1, DP2, DP3) zu den Übertragungspfaden (P1, P2) abhängig von im Rahmen einer Flusskontrolle und/oder Überlastkontrolle erfassten Übertragungsparametern erfolgt.

8. Drahtlos ankoppelbare Kommunikationseinrichtung (MK) zur Übertragung von Datenpaketen (DP1, DP2, DP3) eines Datenstromes, mit
a) Detektormitteln (DE) zum Detektieren von mindestens einem parallel zu einem ersten drahtlosen Übertragungspfad (P1) verfügbaren, weiteren drahtlosen Übertragungspfad (P2),
b) Steuermitteln (ST) zum Selektieren eines jedem der Übertragungspfade (P1, P2) zumindest einen Teil der Datenpakete (DP1, DP2, DP3) zuordnenden Zuordnungsschemas (ZS1, ZS2) abhängig von spezifischen Übertragungserfordernissen und/oder von einem zur Übertragung der Datenpakete (DP1, DP2, DP3) zu verwendenden Übertragungsprotokoll,
c) Adressierungsmitteln (AD) zum Zuordnen einer für einen jeweiligen Übertragungspfad (P1, P2) spezifischen Adressangabe (IP1, IP2) zu einem jeweiligen, diesem Übertragungspfad zugeordneten Datenpaket (DP1, DP2, DP3), und
d) einer Übertragungseinrichtung (IO) zum Übertragen der Datenpakete (DP1, DP2, DP3) anhand der ihnen zugeordneten Adressangaben (IP1, IP2) über die verschiedenen Übertragungspfade (P1, P2) gemäß dem selektierten Zuordnungsschema (ZS1, ZS2);
e) welche Übertragungseinrichtung derart ausgestattet ist, dass mindestens sowohl ein erstes (ZS1) als auch ein zweites Zuordnungsschema (ZS2) selektierbar ist, wobei
- durch das erste Zuordnungsschema (ZS1) aufeinanderfolgende Datenpakete (DP1, DP2, DP3) des Datenstromes abwechselnd dem ersten drahtlosen Übertragungspfad (P1) und mindestens einem weiteren drahtlosen Übertragungspfad (P2) zur Vergrößerung der Bandbreite zugeordnet werden und
- durch das zweite Zuordnungsschema (ZS2) alle Datenpakete (DP1, DP2, DP3) des Datenstromes während eines Handover-Vorganges beiden Übertragungspfaden (P1, P2) zur Parallelübertragung zugeordnet werden.

## Claims

1. Method for transmitting data packets (DP1, DP2, DP3) of a data stream between a wirelessly couplable communications device (MK) and a communications partner (KP), in particular during a handover operation, wherein
a) when a first wireless transmission path (P1) is available, availability of at least one additional wireless transmission path (P2) is detected,
b) on account of the detecting, a specific assignment scheme (ZS1, ZS2), via which each of the transmission paths (P1, P2) has assigned thereto at least some of the data packets (DP1, DP2, DP3), is selected as a function of specific transmission requirements and/or of a transmission protocol to be used to transmit the data packets (DP1, DP2, DP3),
c) a respective data packet assigned to a transmission path (P1, P2) has assigned thereto an address specification (IP1, IP2) specific to said transmission field (P1, P2),
d) the data packets (DP1, DP2, DP3), by way of the address specifications (IP1, IP2) assigned to them according to the selected assignment scheme (ZS1, ZS2), are transmitted via the different transmission paths (P1, P2) between the communications device (MK) and the communication partner (KP) and
e) at least both a first (ZS1) and second assignment scheme (ZS2) are selectable, wherein
- via the first assignment scheme (ZS1) successive data packets (DP1, DP2, DP3) of the data stream
are assigned in an alternate manner to the first wireless transmission path (P1) and to at least one additional wireless transmission path (P2) to increase the band width and
- via the second assignment scheme (ZS2) all data packets (DP1, DP2, DP3) of the data stream are assigned during a handover operation to both transmission paths (P1, P2) for parallel transmission.

2. Method according to Claim 1, **characterized in that** a specific transmission characteristic of the at least one additional transmission path (P2) is detected, and the selection of the assignment scheme (ZS1, ZS2) is effected as a function of the detected transmission characteristic.

3. Method according to one of the preceding claims, **characterized in that** the selection of the assignment scheme (ZS1, ZS2) is effected as a function of an estimated value for the duration of the availability of at least one of the transmission paths (P1, P2).

4. Method according to one of the preceding claims, **characterized in that** the selection of the assignment scheme (ZS1, ZS2) is effected as a function of the number of available transmission paths (P1, P2).

5. Method according to one of the preceding claims, **characterized in that** the assignment of a respective data packet (DP1, DP2, DP3) to at least one transmission path (P1, P2) is effected as a function of the type, content and/or specific function of the data packet (DP1, DP2, DP3).

6. Method according to one of the preceding claims, **characterized in that** the assignment of the data packets (DP1, DP2, DP3) to the transmission paths is executed in the transport layer and/or a protocol layer located thereabove according to the OSI reference model.

7. Method according to one of the preceding claims, **characterized in that** the assignment of the data packets (DP1, DP2, DP3) to the transmission paths (P1, P2) is effected as a function of transmission parameters detected within the framework of a stream check and/or overload check.

8. Wirelessly couplable communications device (MK) for transmitting data packets (DP1, DP2, DP3) of a data stream, having
a) detector means (DE) for detecting at least one additional wireless transmission path (P2) available parallel to a first wireless transmission path (P1),
b) control means (ST) for selecting an assignment scheme (ZS1, ZS2) assigning to each of the transmission paths (DP1, DP2, DP3) at least some of the data packets (DP1, DP2, DP3) as a function of specific transmission requirements and/or of a transmission protocol to be used for transmitting the data packets (DP1, DP2, DP3),
c) addressing means (AD) for assigning an address specification (IP1, IP2) specific to a respective transmission path (P1, P2) to a respective data packet (DP1, DP2, DP3) assigned to said transmission path and
d) a transmission device (IO) for transmitting the data packets (DP1, DP2, DP3) by way of the address specifications (IP1, IP2) assigned to them via the different transmission paths (P1, P2) according to the selected assignment scheme (ZS1, ZS2);
e) which transmission device is designed in such a manner that at least both a first (ZS1) and a second assignment scheme (ZS2) are selectable, wherein
- via the first assignment scheme (ZS1) successive data packets (DP1, DP2, DP3) of the data stream are assigned in an alternate manner to the first wireless transmission path (P1) and at least to one additional wireless transmission path (P2) to increase the band width and
- via the second assignment scheme (ZS2) all data packets (DP1, DP2, DP3) of the data stream are assigned during a handover operation to both transmission paths (P1, P2) for parallel transmission.

## Revendications

1. Procédé destiné à la transmission de paquets de données (DP1, DP2, DP3) d'un flux de données entre un dispositif de communication (MK) sans fil pouvant être couplé et un partenaire de communication (KP) en particulier durant une opération de transfert cellulaire, sachant que
a) en cas de disponibilité d'un premier chemin de transmission sans fil (P1), il est détecté une disponibilité d'au moins un autre chemin de transmission sans fil (P2),
b) suite à la détection, un schéma d'attribution spécifique (ZS1, ZS2), par lequel au moins une partie des paquets de données (DP1, DP2, DP3) est attribuée à chacun des chemins de transmission (P1, P2), est sélectionné en fonction d'exigences de transmission spécifiques et/ou en fonction d'un protocole de transmission employé pour la transmission des paquets de données (DP1, DP2, DP3),
c) une indication d'adresse (IP1, IP2) spécifique à ce chemin de transmission (P1, P2) est attribuée à un paquet de données respectif attribué à un chemin de transmission (P1, P2),
d) à l'aide des indications d'adresse (IP1, IP2) leur ayant été attribuées selon le schéma d'attribution (ZS1, ZS2) sélectionné, les paquets de données (DP1, DP2, DP3) sont transmis par le biais des différents chemins de transmission (P1, P2) entre le dispositif de communication (MK) et le partenaire de communication (KP) et
e) au moins aussi bien un premier schéma d'attribution (ZS1) qu'un deuxième schéma d'attribution (ZS2) peut être sélectionné, sachant que
- par le premier schéma d'attribution (ZS1), des paquets de données (DP1, DP2, DP3) successifs du flux de données sont attribués en alternance au premier chemin de transmission sans fil (P1) et au moins à un autre chemin de transmission sans fil (P2) afin d'augmenter la largeur de bande et
- par le deuxième schéma d'attribution (ZS2), tous les paquets de données (DP1, DP2, DP3) du flux de données sont attribués durant une opération de transfert cellulaire aux deux chemins de transmission (P1, P2) en vue d'une transmission parallèle.

2. Procédé selon la revendication 1,
**caractérisé en ce**
**qu'**une propriété de transmission spécifique du ou des autres chemins de transmission (P2) est détectée, et en ce que le choix du schéma d'attributions (ZS1, ZS2) est effectué en fonction de la propriété de transmission détectée.

3. Procédé selon l'une quelconque des revendications précédentes,
**caractérisé en ce**
**que** le choix du schéma d'attribution (ZS1, ZS2) est effectué en fonction d'une valeur estimative relative à la durée de la disponibilité d'au moins un des chemins de transmission (P1, P2).

4. Procédé selon l'une quelconque des revendications précédentes,
**caractérisé en ce**
**que** le choix du schéma d'attribution (ZS1, ZS2) est effectué en fonction du nombre de chemins de transmission (P1, P2) disponibles.

5. Procédé selon l'une quelconque des revendications précédentes,
**caractérisé en ce**
**que** l'attribution d'un paquet de données respectif (DP1, DP2, DP3) à au moins un chemin de transmission (P1, P2) est effectué en fonction du type, du contenu et/ou de l'objectif d'utilisation du paquet de données (DP1, DP2, DP3).

6. Procédé selon l'une quelconque des revendications précédentes,
**caractérisé en ce**
**que** l'attribution des paquets de données (DP1, DP2, DP3) aux chemins de transmission est effectuée dans la couche de transport et/ou dans une couche de protocole supérieure selon le modèle de référence OSI.

7. Procédé selon l'une quelconque des revendications précédentes,
**caractérisé en ce**
**que** l'attribution des paquets de données (DP1, DP2, DP3) aux chemins de transmission (P1, P2) est effectuée en fonction de paramètres de transmission détectés dans le cadre d'un contrôle de flux et/ou d'un contrôle de surcharge.

8. Dispositif de communication à couplage sans fil (MK) destiné à la transmission de paquets de données (DP1, DP2, DP3) d'un flux de données, pourvu
a) de moyens de détection (DE) permettant de détecter au moins un autre chemin de transmission sans fil (P2), disponible en parallèle à un premier chemin de transmission sans fil (P1),
b) de moyens de commande (ST) permettant de sélectionner un schéma d'attribution (ZS1, ZS2) attribuant à chacun des chemins de transmission (P1, P2) au moins une partie des paquets de données (DP1, DP2, DP3) en fonction d'exigences de transmission spécifiques et/ou en fonction d'un protocole de transmission employé pour la transmission des paquets de données (DP1, DP2, DP3),
c) de moyens d'adressage (AD) permettant d'attribuer une indication d'adresse (IP1, IP2) spécifique à un chemin de transmission respectif (P1, P2) à un paquet de données (DP1, DP2, DP3) respectif attribué à ce chemin de transmission, et
d) un dispositif de transmission (IO) permettant de transmettre les paquets de données (DP1, DP2, DP3) à l'aide des indications d'adresse (IP1, IP2) leur étant attribuée par le biais des différents chemins de transmission (P1, P2) selon le schéma d'attribution sélectionné (ZS1, ZS2) ;
e) lequel dispositif de transmission est conçu de sorte que, pour le moins, aussi bien un premier schéma d'attribution (ZS1) qu'un deuxième schéma d'attribution (ZS2) puisse être sélectionné, sachant que
- par le biais du premier schéma d'attribution (ZS1), des paquets de données successifs (DP1, DP2, DP3) du flux de données sont attribués en alternance au premier chemin de transmission sans fil (P1) et au moins à un autre chemin de transmission sans fil (P2) en vue d'augmenter la largeur de bande et
- par le biais du deuxième schéma d'attribution (ZS2), tous les paquets de données (DP1, DP2, DP3) du flux de données sont attribués durant une opération de transfert cellulaire aux deux chemins de transmission (P1, P2) en vue d'une transmission parallèle.
